# EUROPEAN PATENT APPLICATION

(11) **EP 4 498 298 A1**
(43) Date of publication of application: **29.01.2025**
(21) Application number: 23188020.4
(22) Date of filing: 27.07.2023
(51) Int. Cl.: G06Q 10/04, B05B 12/00, B05B 17/04, B05D 1/02, G05B 17/02, G05B 19/418, G05B 23/02, G06N 3/08, G06N 20/00

(54) **A SYSTEM FOR ASSISTING A USER IN ADJUSTING A MATERIAL TREATMENT PROCESS**

(71) Applicant: BASF Coatings GmbH, 48165 Münster (DE)
(72) Inventor: McKeon, Sean R., Southfield, MI 48033 (US); Boudreaux, John Philip, Houston, 77006 (US); Kaufmann, Aaron, Southfield, MI 48033-2442 (US)
(74) Representative: Eisenführ Speiser

(57) **Abstract**

A system (100) for assisting a user in adjusting a material treatment process in which successively provided objects (10) are being treated is presented. The system comprises a data providing unit (101) to provide treatment data (11a, 11b) indicative of process parameter values during past treatments, and a quality indicator providing unit (102) to provide quality indicators (Q) for the objects that indicate respective treatment qualities achieved. Furthermore, the system comprises an analysis unit (103) to analyze the treatment data and/or the quality indicators, and a graphical representation determining unit (104) to determine a graphical representation (40, 50, 61, 71) of a result of the analysis. With a system of the presented kind, insights into the material treatment process can be provided to a user that can assist him/her in adjusting the process in a way allowing for an increased treatment quality.

## Description

### FIELD OF THE INVENTION

The invention relates to a system, a method and a computer program for assisting a user in adjusting a material treatment process in which successively provided objects are being treated.

### BACKGROUND OF THE INVENTION

In treatment processes in which a material of successively provided vehicles or other objects is being treated, a quality assessment of each object after being treated can be carried out to assess a treatment quality achieved for the object. Based on a result of the quality assessment, as determined by a standardized quality indicator, for instance, it can be determined for each object whether a supplementary treatment is necessary to improve the object's quality. Such supplementary treatments can be inefficient for cost and time reasons. It is therefore desired to increase the number of objects for which a sufficient treatment quality is achieved without a supplementary treatment, which necessitates an adjustment of the respective treatment process. Identifying the right adjustments can, however, be a complex task.

### SUMMARY OF THE INVENTION

It is an object of the invention to provide assistance in identifying adjustments to a material treatment process that allow for an increased treatment quality.

In a first aspect, the invention relates to a system for assisting a user in adjusting a material treatment process in which successively provided objects are being treated, wherein the system comprises a) a treatment data providing unit configured to provide treatment data indicative of process parameter values during past treatments of a plurality objects in the material treatment process, and b) a quality indicator providing unit configured to provide a quality indicator for each of the plurality of objects, the quality indicators being indicative of treatment qualities achieved for the respective objects. Furthermore, the system comprises c) a data analysis unit configured to analyze at least one of the treatment data and the quality indicators and to provide a result of the analysis as an output, and d) a graphical representation determining unit configured to determine a graphical representation of the output of the data analysis unit.

By analyzing treatment data indicative of process parameter values during past treatments of a plurality objects in the material treatment process and/or quality indicators indicative of treatment qualities achieved for each of the objects, and determining a graphical representation of a result of the analysis, insights into the material treatment process can be provided to a user that can assist him or her in adjusting the process in a way allowing for an increased treatment quality.

Preferably, the data analysis unit comprises or corresponds to at least one of i) a critical process parameter range identifying unit configured to identify critical process parameter ranges by determining, based on the treatment data and the quality indicators, how often each of a plurality of process parameter ranges led to an insufficient treatment quality, ii) a user input-based unit configured to determine, based on the treatment data and the quality indicators, and further based on user-selected ranges of user-selected process parameters, how often each of the user-selected ranges of the user-selected process parameters led to an insufficient treatment quality, and iii) a treatment data quality determining unit configured to determine, based on the treatment data, at least one of a) a variability indicator for each of a plurality process parameters, the variability indicator indicating a variability of values of the respective process parameters during the past treatments, and b) an availability indicator for each of a plurality of process parameters, the availability indicator indicating for how many treated objects treatment data indicative of values of the respective process parameter were provided. The graphical representation determining unit is then preferably configured to determine a graphical representation of an output of the critical process parameter range identifying unit, the user input-based unit and/or the treatment data quality determining unit, respectively.

Which of the critical process parameter range identifying unit, the user input-based unit and the treatment data quality determining unit, or which combination thereof, is comprised by the analysis unit, and which functions the respective unit is configured to carry out, may be selected by the system in dependence on the treatment process, the provided treatment data and/or the provided quality indicator.

The material treatment process can involve, particularly consist in, a coating and/or painting of objects. The coating and/or painting of the objects can be a multiple coating and/or painting, wherein several coatings and/or paintings may be applied in layers to the object. The objects being treated are preferably vehicles or vehicle parts. The material treatment process may hence particularly refer to an automotive paint job. In other words, the material treatment process may particularly refer to the sequence of processing steps commonly carried out in an automotive paint shop. In principle, however, the system presented herein may just as well provide assistance to a user in adjusting any other material treatment process in which successively provided objects are being treated.

It will be understood that a material treatment process in which objects are being treated could also be referred to as a process in which a material of objects is being treated. The objects may be manufactured beforehand. That the objects are successively provided is to be understood such that the objects are provided for treatment in succession, wherein this does not exclude that any two objects are being treated simultaneously. For instance, as known from automotive paint jobs, the treated objects may be forwarded through several treatment stations one after the other, such that each object undergoes a treatment characteristic for a respective treatment station at an own time. In automotive paint shops, for instance, the treatment stations may refer to paint booths, i.e. booths in which a paint is applied, such as by spraying, onto a previously manufactured automobile part.

That the provided treatment data are indicative of process parameter values during past treatments of a plurality objects in the material treatment process shall be understood such that the treatment data preferably correspond to the process parameter values or allow for a determination or estimation of the process parameter values. The process parameters preferably refer to controllable parameters affecting the material treatment process, which may at least partially also be referred to as control parameters. The treatment data may hence refer, for instance, to control data based on which control parameters are set, or to measurement data measured for monitoring process parameters.

The treatment data can particularly include sensor data from a plurality of sensors configured to measure process parameters of the material treatment process. The process parameters may particularly be indicative of how a coating and/or of how a paint is applied to surfaces of the vehicles or other objects being treated. Non-limiting examples of sensor data include a respective temperature and/or pressure of one or more vessels, one or more robot systems and/or one or more ovens involved in the material treatment process. Also speeds and counts may be captured using sensors like optical sensors, such as the speed of an object transported along a treatment line or a number of a treated object in a sequence of treated objects. The sensor data and hence the process parameters may also refer to any of a humidity of air while objects are being coated and/or colored, particularly a humidity in coating and/or color booths, a temperature of ovens used for curing a coating and/or paint previously applied to objects, a pressure used for spraying a coating and/or paint on objects, as well as a coating and/or paint volume used for coating and/or painting objects. The sensors can be configured to measure the process parameters automatically, wherein the measurement data resulting from these measurements may correspond to the treatment data.

Additionally or alternatively, the treatment data can include coating and/or paint data, the coating and/or paint data being indicative of a respective coating and/or paint used for treating each of the plurality of objects. The coating and/or paint data may particularly include coating and/or paint identifiers. It may be received digitally from a supplier of the coating or paint, respectively, and/or may be provided by scanning a data carrier, such as a tag or barcode, supplied together with the coating or paint, respectively, wherein the tag or barcode may, for instance, be provided on a packaging of the coating or paint, respectively.

Coating and/or paint data, as well as any other data relating to a material used for object treatment, are herein understood as being treatment data indicative of process parameter values as well. That is to say, a coating and/or paint to be used for treating a vehicle or vehicle part, i.e. its formula, for instance, is understood as a process parameter as well. For instance, the coating and/or paint data may also be measured using sensors, or it may be digitally provided upon supply. Like the data from sensors measuring other process parameters, also the coating and/or paint data may vary, potentially despite a desired fixed formula.

The quality indicators may be provided based on human assessments of a treatment quality achieved for a respective object. For instance, trained treatment quality assessors may carry out the assessments and record the results.

The assessments can include visual inspections of surfaces of the objects being treated. The visual inspections can include inspections of defects in painted object surfaces, particularly an identification of chipped paint, and/or of a uniformity of a coloring of object surfaces. A uniformity of a coloring of a surface can refer to color gradients in the coloring or to a thickness with which a color is applied to the surface. In automotive paint shops, such assessments would typically be carried at so-called finesse decks.

The quality indicator can particularly refer to a first time quality (FTQ) or an appearance indicator, such as in the form of a respective index. FTQ is preferentially being assessed based on how much dirt and/or how many defects are detectable in an applied coating or painting, with FTQ decreasing the more dirt and/or defects are being detected and vice versa, or wherein FTQ is a binary measure indicating either that a coating or painting comprises dirt and/or defects to an acceptably low degree or not. The appearance of an applied coating or painting is preferentially understood as referring to an overall smoothness of it, i.e., for instance, to an overall smoothness resulting from multiple layers of one or coatings and/or one or more paintings. A desired appearance may be glass-like, whereas a fuzzy or wavy appearance may be less desired.

As mentioned above, the analysis unit, which is configured to analyze the treatment data and/or the quality indicators, may comprise a critical process parameter range identifying unit configured to identify critical process parameter ranges. The critical process parameter ranges may refer to process parameter ranges which have led to an insufficient treatment quality more than a predefined critical number of times. An insufficient treatment quality may be concluded for treated objects for which a quality indicator indicating a quality below a predefined minimum quality was provided. If the quality indicator is a binary indicator taking, for each treated object, one of two possible values, for instance, one of its possible values may indicate a sufficient treatment quality while the other of its two possible values may indicate an insufficient treatment quality.

The treatment data providing unit may be configured to provide the treatment data partitioned according to the process parameters for whose values they are indicative, wherein the critical process parameter range identifying unit may be configured to segment the partitioned treatment data further into partitioned treatment data segments corresponding to a plurality of process parameter ranges.

The partitioning can, for instance, be a partitioning according to data sources via which the treatment data are acquired and/or provided. The data sources of the sensor data would be, for instance, the respective sensors. The segmentation of the partitioned treatment data into the partitioned treatment data segments can be carried out based on predefined occurrence rate thresholds and/or based on predefined threshold values. For instance, the partitioned sensor data may be segmented into segments of a) values considered regular and occurring most often, b) values considered low and occurring less often than the values considered regular, and c) values considered high and occurring less often than the values considered regular.

The graphical representation determining unit may be configured to determine a segmented histogram for partitioned treatment data indicative of a user-selectable process parameter as graphical illustration, wherein the segmented histogram comprises segments corresponding to respective process parameter ranges. Hence, the segments of the histogram correspond to the partitioned treatment data segments of the treatment data indicative of the process parameter selected by the user.

The critical process parameter range identifying unit may be configured to determine, for each of the partitioned treatment data segments, at least two of a) an occurrence indicator indicating how often treatment data from the partitioned treatment data segment occurred, b) a conditional occurrence indicator indicating how often, among all occurrences of treatment data from the partitioned treatment data segment, an insufficient treatment quality was achieved as indicated by the quality indicators, and c) a critical occurrence indicator indicating how often treatment data from the partitioned treatment data segment occurred and also an insufficient treatment quality was achieved as indicated by the quality indicators.

In particular, the occurrence indicator, the conditional occurrence indicator and the critical occurrence indicator may each refer to a respective probability, wherein the probabilities may be derived from the treatment data and/or the quality indicators. Hence, for instance, the occurrence indicator may refer to the probability p(data) with which treatment data from a given partitioned treatment data segment can be observed, the conditional occurrence indicator may refer to the probability p(Q- | data) with which, knowing that treatment data from a given partitioned treatment data segment can be observed, an insufficient treatment quality can be observed, and the critical occurrence indicator may refer to the probability p(Q- ∧ data) that treatment data from the partitioned treatment data segment and also an insufficient treatment quality can be observed. In this case, the relation p(Q- ∧ data) = p(Q-| data) × p(data) may be established.

The probabilities p(data), p(Q- | data) and p(Q- ∧ data) may be determined by counting the numbers of objects, i.e. particularly vehicles or vehicle parts, for which the respective conditions have been observed and dividing the respective number by the total number of objects, i.e. particularly vehicles or vehicle parts, for whose treatment the respective process parameter for which the considered treatment data is indicative is relevant. For instance, a control parameter for a nozzle activated only for treating a certain class of vehicles is irrelevant for vehicles outside of this class. A statistical distribution of data from sensors monitoring this control parameter is therefore preferably normalized with respect to only those vehicles in the relevant class.

The graphical representation determining unit can be configured to determine a scatterplot as graphical illustration, wherein the scatterplot comprises data points representing the partitioned treatment data segments in terms of the critical occurrence indicator and the conditional occurrence indicator. Such a scatterplot can provide a good overview of the data from a treatment process and parts of the process that may negatively affect a treatment quality. It can therefore be a good starting point for identifying optimization potentials in the treatment process. Preferably, the scatterplot additionally carries information about the occurrence indicators determined for the partitioned treatment data segments.

In an example, the data points, of which each represents a respective partitioned treatment data segment and hence a predefined range of a predefined process parameter, are plotted in two spatial dimensions corresponding to the critical occurrence indicator and the conditional occurrence indicator, respectively, and with a size corresponding to the occurrence indicator.

The critical process parameter range identifying unit can be configured to determine a degree of criticality for the plurality of process parameter ranges based on the indicators determined for the partitioned treatment data segments. The data points in the scatterplot can be colored according to the degrees of criticality. Preferably, the degree of criticality is determined such that it increases with increasing critical occurrence indicator and also with increasing conditional occurrence indicator.

Instead of looking for critical process parameter ranges individually, also pairs, triples, quadruples, et cetera, i.e. generally n-tuples of process parameter ranges may be analyzed regarding their effects on treatment quality. Accordingly, the critical process parameter range identifying unit may, additionally or alternatively, be configured to determine for each of a predefined set of n-tuples of the partitioned treatment data segments, at least two of a) an occurrence indicator indicating how often treatment data from the n-tuple occurred, b) a conditional occurrence indicator indicating how often, among all occurrences of treatment data from the n-tuple, an insufficient treatment quality was achieved as indicated by the quality indicators, and c) a critical occurrence indicator indicating how often treatment data from the n-tuple occurred and also an insufficient treatment quality was achieved as indicated by the quality indicators.

Still, the occurrence indicator, the conditional occurrence indicator and the critical occurrence indicator may each refer to a respective probability, wherein the probabilities may be derived from the treatment data and/or the quality indicators. Hence, for instance, the occurrence indicator may refer to the probability pₙ(data) with which treatment data from a given n-tuple of partitioned treatment data segments can be observed, the conditional occurrence indicator may refer to the probability pₙ(Q- | data) with which, knowing that treatment data from the given n-tuple of partitioned treatment data segments can be observed, an insufficient treatment quality can be observed, and the critical occurrence indicator may refer to the probability pₙ(Q- ∧ data) that treatment data from the given n-tuple of partitioned treatment data segments and also an insufficient treatment quality can be observed. In this case, the relation pₙ(Q- ∧ data) = pₙ(Q- | data) × pₙ(data) may be established.

Also the probabilities pₙ(data), pₙ(Q- | data) and pₙ(Q- ∧ data) may be determined by counting the numbers of objects, i.e. particularly vehicles or vehicle parts, for which the respective conditions have been observed and dividing the respective number by the total number of objects, i.e. particularly vehicles or vehicle parts, for whose treatment the respective process parameters for which the considered treatment data is indicative is relevant.

Accordingly, the graphical representation determining unit can be configured to determine a scatterplot as graphical illustration, wherein the scatterplot comprises data points representing the n-tuples of partitioned treatment data segments in terms of the critical occurrence indicator and the conditional occurrence indicator. The scatterplot additionally carries information about the occurrence indicators determined for the n-tuples of partitioned treatment data segments.

In an example, the data points, of which each represents a respective n-tuple of partitioned treatment data segments, are plotted in two spatial dimensions corresponding to the critical occurrence indicator and the conditional occurrence indicator, respectively, and with a size corresponding to the occurrence indicator.

The critical process parameter range identifying unit can be configured to determine a degree of criticality for the plurality of n-tuples of process parameter ranges based on the indicators determined for the n-tuples of partitioned treatment data segments. The data points in the scatterplot can be colored according to the degrees of criticality. Preferably, the degree of criticality is determined such that it increases with increasing critical occurrence indicator and also with increasing conditional occurrence indicator.

The system, particularly its analysis unit, may, furthermore, comprise a coating and/or paint quality influence determining unit configured to determine, based on the coating and/or paint data included in the treatment data and the quality indicators, a coating and/or paint quality influence indicator indicative of an influence of the coatings and/or paint used for treating the plurality of objects on the achieved treatment qualities.

The coating and/or paint quality influence determining unit can, for instance, be configured to determine the coating and/or paint quality influence indicators by determining, for each of the coatings and/or paints, at least two of a) how often the coating and/or paint was used, b) how often, among all treatments in which the coating and/or paint was used, an insufficient treatment quality was achieved as indicated by the quality indicators, and c) how often the coating and/or paint was used and also an insufficient treatment quality was achieved as indicated by the quality indicators.

As indicated already, additionally or alternatively to the critical process parameter range identifying unit, the analysis unit may comprise the user input-based unit to determine, based on the treatment data and the quality indicators, and further based on user-selected ranges of user-selected process parameters, how often each of the user-selected ranges of the user-selected process parameters led to an insufficient treatment quality.

The user input-based unit can be configured to determine how often each of the user-selected ranges of the user-selected process parameters led to an insufficient treatment quality for a user-selected class of objects being treated. If the objects are vehicles or vehicle parts, the classes of objects may indicate whether the vehicle is a convertible or a coupe, for instance.

Apart from the user-selectable process parameters and the user-selectable ranges thereof, also the kind of quality indicator considered by the user input-based unit for measuring whether the treatment qualities were sufficient or not may be user-selectable.

Furthermore, the analysis unit may comprise, additionally or alternatively to the critical process parameter range identifying unit and the user input-based unit, the treatment data quality determining unit. The treatment data quality determining unit does not necessarily need to be provided with the quality indicators. As indicated above, it is configured to determine at least one of a) a variability indicator for each of a plurality process parameters, the variability indicator indicating a variability of values of the respective process parameters during the past treatments, and b) an availability indicator for each of a plurality of process parameters, the availability indicator indicating for how many treated objects treatment data indicative of values of the respective process parameter were provided.

The treatment data quality determining unit may be configured to determine, based on the treatment data, a value of each of the plurality of process parameters for the past treatment of each of the plurality of objects. Furthermore, the graphical representation determining unit may be configured to determine as graphical representation a plot of the values of a user-selected one of the plurality of process parameters over the past treatments of the plurality of objects. Similarly as from the histogram referred to further above, from such a plot the user can efficiently gain insights into the variability of a selected process parameter. As compared to a histogram, the plot additionally allows for temporally resolved insights.

The treatment data quality determining unit may be configured to determine, based on the treatment data, whether or not each of the plurality of process parameters was acquired for the past treatment of each of the plurality of objects. The graphical representation determining unit may then be configured to determine as graphical representation for a user-selected one of the plurality of process parameters a binary line pattern comprising lines and gaps between lines, wherein the lines represent treatments of objects for which the user-selected process parameter was acquired and the gaps between the lines represent treatments of objects for which the user-selected process parameter was not acquired.

Such a binary line pattern allows the user to efficiently gain insights into an availability of the process parameter, which can be related to a reliability of corresponding sensors, for instance. The generated binary line patterns can also easily be digitized, such as by use of conventional barcode scanners.

Furthermore, the system optionally comprises an expected treatment quality indicating unit configured to provide, if provided with treatment data for a given treated object as input, an output indicative of an expected treatment quality for the given treated object based on a trained model relating treatment data to quality indicators. The trained model may, for instance, be a machine learning model trained on past treatment data for a plurality of treated objects as input, i.e. training input, and quality indicators provided for the plurality of treated objects as output, i.e. training output.

The system may further comprise an optimized treatment indicating unit configured to receive treatment data for one or more treated objects as input and to provide, as output, an indication of treatment data optimized with respect to the treatment data received as input, by using the expected treatment quality indicating unit. Also the optimized treatment indicating unit may employ machine-learning techniques, i.e. in using the expected treatment quality indicating unit to find, for given treatment data received as input, optimized versions thereof, which can then be provided as output.

The machine learning model based on which the expected treatment quality indicating unit provides its output and the machine learning techniques employed by the optimized treatment indicating unit can use, correspond to or be based on, respectively, any of the following: linear and/or multi-variate regression, Euclidean distances, Mahalanobis distances, Leverage, Gaussian mixture models, Shapley values, Association Rules, K-Means Clustering, Spectral Clustering, Principal Component Analyses, Random Forest and XGBoost algorithms, naive Bayes, K-nearest-neighbors, random forests, gradient boosted trees, and neural networks.

Data engineering methods like, for instance, one-hot encoding or binning may be used to convert the treatment data and/or the quality indicators corresponding to the treatment data into inputs for the machine learning model. Such engineering methods may be implemented as functions of, for instance, the treatment data providing unit, the quality indicator providing unit, and/or as part of a segmentation and/or partitioning of the data as carried out by the critical process parameter range identifying unit.

The system may also comprise a critical treatment detection unit configured to detect critical object treatments based on the treatment data and optionally the quality indicators based on a) principal components of the treatment data and optionally the quality indicators and b) a criticality criterion predefined with respect to the principal components. By determining principal components of the treatment data, statistically relevant insights into the data can be gained more efficiently. In particular, in this way combinations of process parameters can be identified which are particularly likely to lead to an insufficient treatment quality, possibly due to particularly large variations in the combination of process parameters as indicated by the principal components of the treatment data.

The system may correspond to or be part of a distributed computing environment. Accordingly, the treatment data may be treatment data acquired at a treatment site at which the plurality of objects have been treated, wherein the data processing carried out by the analysis unit, particularly the critical process parameter range identifying unit, the user input-based unit and/or the treatment data quality determining unit, respectively, may be carried out at a data processing site, wherein the data processing site may not coincide with the treatment site. Also the data processing site itself, which may also be referred to as data analysis site, may not be spatially localized, but may instead be realized in the cloud, for instance. Moreover, the quality indicators may be quality indicators determined at a quality determination site at which the quality indicators have been determined for the plurality of treated objects, wherein the quality determination site may coincide with the treatment site or not.

The system may comprise hardware components distributed over the treatment site, the quality determination site and the data processing site. Additionally or alternatively, the system may comprise hardware components located at a site different from the treatment site, the quality determination site and the data processing site. For instance, all hardware components of the system may be located on a server at an arbitrary location, wherein the server may be accessible via the cloud from any of the treatment site, the quality determination site and the data processing site.

The treatment data providing unit may be configured to provide the treatment data based on a data transfer from the treatment site to the data processing site. The data transfer from the treatment site to the data processing site can be carried out in predefined intervals. For instance, the data transfer can be carried out daily or once per week. Likewise, the quality indicator providing unit may be configured to provide the quality indicators based on a data transfer from the quality determination site to the data processing site. If the treatment site and the quality determination site do not coincide, the plurality of objects may be transferred from the treatment site to the quality determination site in order to allow for a determination of the quality indicators for the plurality of objects.

In the example of vehicles or vehicle parts being treated by applying one or more coatings and/or paints, the treatment site could correspond to an original equipment manufacturer's plant, and the data processing site could correspond to a research facility of a supplier of the coatings and/or paints. The supplier may in this way gain insights into a performance of the supplied coatings and/or paints, and may adapt the coatings and/or paintings, i.e. their formulae, and/or instruct the original equipment manufacturer to adjust an application of the coatings and/or paints, based on the gained insights.

The system preferably comprises at least two of the critical process parameter range identifying unit, the user input-based unit and the treatment data quality determining unit. The graphical representation determining unit may then be configured to select the respective output for which to determine the graphical representation based on a user input. For instance, the graphical representations for the different outputs can be accessible via different windows of a graphical user interface, wherein the user may switch between the different windows.

The graphical representation determining unit may be configured to determine the graphical representation depending on the user. For instance, different graphical representations, particularly different graphical user interfaces in general, may be determined by the graphical representation determining unit depending on whether the user accesses the system from the treatment site, the quality determination site or the data processing site. The distinction between users accessing the system from the different sites may correspond to a distinction between users according to their affiliation to one of a) an entity treating the objects, b) an entity determining the quality indicators, and c) an entity carrying out the data processing. An "entity" can particularly refer to a company.

The invention also relates to an apparatus for assisting a user in adjusting a material treatment process in which successively provided objects are being treated, the apparatus comprising a system as described above, and a display for displaying the graphical representation.

In a further aspect, the invention relates to a method for assisting a user in adjusting a material treatment process in which successively provided objects are being treated, the method including the steps of a) providing treatment data indicative of process parameter values during past treatments of a plurality objects in the material treatment process, b) providing a quality indicator for each of the plurality of objects, the quality indicators being indicative of treatment qualities achieved for the respective objects, c) analyzing at least one of the treatment data and the quality indicators, and d) determining a graphical representation of a result of the analysis.

As already mentioned further above regarding the corresponding system, by analyzing treatment data indicative of process parameter values during past treatments of a plurality objects in the material treatment process and/or quality indicators indicative of treatment qualities achieved for each of the objects, and determining a graphical representation of a result of the analysis, insights into the material treatment process can be provided to a user that can assist him or her in adjusting the process in a way allowing for an increased treatment quality.

As described in more detail above by reference to the corresponding system, analyzing the data preferably includes or corresponds to at least one of i) identifying critical process parameter ranges by determining, based on the treatment data and the quality indicators, how often each of a plurality of process parameter ranges led to an insufficient treatment quality, ii) determining, based on the treatment data and the quality indicators, and further based on user-selected ranges of user-selected process parameters, how often each of the user-selected ranges of the user-selected process parameters led to an insufficient treatment quality, and iii) determining, based on the treatment data, at least one of a) a variability indicator for each of a plurality process parameters, the variability indicator indicating a variability of values of the respective process parameters during the past treatments, and b) an availability indicator for each of a plurality of process parameters, the availability indicator indicating for how many treated objects treatment data indicative of values of the respective process parameter were provided.

Another aspect of the invention relates to a computer program comprising instructions which, when executed by a computer, cause the computer to carry out a method as defined above. The term "computer" may also refer to a distributed computing environment.

In a further aspect, the invention also relates to a use of the above system for adjusting a material treatment process, particularly for optimizing an application of coatings and/or paint to vehicles or vehicle parts, such as in a paint shop.

It shall be understood that the aspects described above, specifically the system of claim 1, the method of claim 14 and the computer program of claim 15, have similar and/or identical preferred embodiments, in particular as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
- Fig. 1A: shows schematically and exemplarily a system for assisting a user in adjusting a material treatment process in which successively provided objects are being treated,
- Fig. 1B: shows schematically and exemplarily a material treatment process in which successively provided vehicles are being treated by applying a coating and/or paint,
- Fig. 2: shows schematically and exemplarily a segmented histogram for partitioned treatment data indicative of a user-selectable process parameter,
- Fig. 3: shows schematically and exemplarily a table associating occurrence rates of several process parameter ranges with insufficient treatment qualities achieved,
- Fig. 4: shows schematically and exemplarily a graphical representation of the data from the table of Fig. 3 in the form of a scatterplot,
- Fig. 5: shows schematically and exemplarily a graphical representation of an association between user-selectable process parameter ranges and achieved treatment qualities,
- Fig. 6: shows schematically and exemplarily a graphical representation of a variability of a process parameter,
- Fig. 7: shows schematically and exemplarily a graphical representation of an availability of a process parameter,
- Fig. 8: shows schematically and exemplarily a data processing structure for optimizing a material treatment process,
- Fig. 9: shows schematically and exemplarily a structure of a user interface for assisting a user in adjusting a material treatment process,
- Fig. 10: shows schematically and exemplarily a data architecture for acquiring treatment data and quality indicators from a material treatment process,
- Fig. 11: shows schematically and exemplarily a spatial relationship between a material treatment site and a data analysis site, and
- Fig. 12: shows schematically and exemplarily a method for assisting a user in adjusting a material treatment process.

### DETAILED DESCRIPTION OF EMBODIMENTS

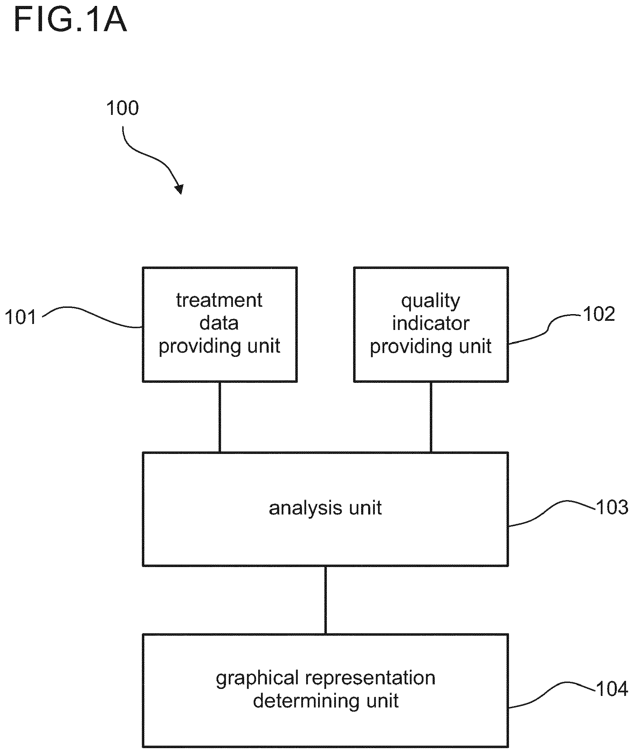

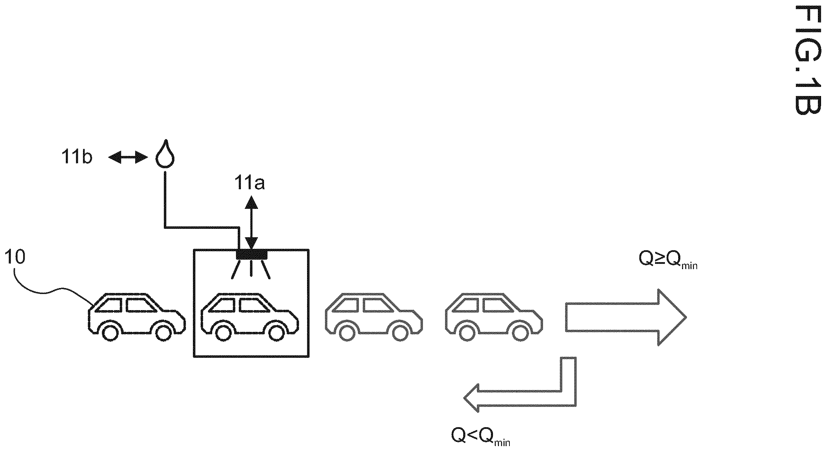

Fig. 1A shows schematically and exemplarily a system 100 for assisting a user in adjusting a material treatment process in which successively provided objects are being treated. Fig. 1B schematically illustrates such a material treatment process, wherein in the exemplary case illustrated by Fig. 1B the objects being treated are vehicles 10. Although the system presented herein is not limited to a use in relation to treatments of vehicles, i.e. although any other objects could be treated, the following detailed description will relate to vehicles as an example for objects whose treatment is to be adjusted.

As shown in Fig. 1A, the system 100 comprises a treatment data providing unit 101 that is configured to provide treatment data indicative of process parameter values during past treatments of a plurality of vehicles 10 in the material treatment process. As illustrated in Fig. 1B, the treatment data may relate, for instance, to control or sensor data 11a indicative of how a paint or coating is applied to the vehicles 10, and/or to material data 11b indicative of a paint or coating used for treating the vehicles 10.

The system 100 further comprises a quality indicator providing unit 102 configured to provide a quality indicator Q for each of the plurality of vehicles 10, the quality indicators Q being indicative of treatment qualities achieved for the respective vehicles 10. As seen in Fig. 1B, for instance, the quality indicator Q may be compared to a threshold Qₘᵢₙ, wherein if the quality indicator determined for a given treated vehicle 10 is above or equal to the threshold Qₘᵢₙ, i.e. if Q ≥ Qₘᵢₙ, the treatment quality achieved for this vehicle 10 is considered to be sufficient, and if the quality indicator Q determined for a treated vehicle is below the threshold Qₘᵢₙ, i.e. if Q < Qₘᵢₙ, the treatment quality achieved for this vehicle 10 is considered to be insufficient and the vehicle 10 has to be retreated. Particularly when painting and/or coating vehicles 10 or vehicle parts, the quality indicator Q may refer to a first time quality (FTQ) or an appearance indicator, which may be determined by trained humans at an end of a production line.

The system 100 further comprises an analysis unit 103 that is configured to analyze at least one of the treatment data 10a, 10b and the quality indicators Q, i.e. either only the treatment data 10a, 10b, only the quality indicators Q, or both. Furthermore, the analysis unit 103 is configured to provide a result of the analysis as an output to a graphical representation determining unit 104 of the system 100. The graphical representation determining unit 104 is configured to determine a graphical representation of the output of the data analysis unit 103. Examples thereof will subsequently be described.

Preferably, the data analysis unit 103 comprises or corresponds to at least one of a critical process parameter range identifying unit 103a, a user input-based unit 103b and a treatment data quality determining unit 103c. Functions of the three units are preferably selectively accessible by a user of the system 100. The graphical representation determining unit 104 may then be configured to determine a graphical representation of an output of the selected one of the critical process parameter range identifying unit 103a, the user input-based unit 103b and a treatment data quality determining unit 103c. Each of the three units 103a, 103b, 103c may be accessible via a separate window or screen of a same software application.

In order to prepare for the analysis of the data, the treatment data providing unit 101 is preferentially configured to provide the treatment data 10a, 10b partitioned according to the process parameters for whose values they are indicative. Particularly the partitioned treatment data 10a may then be further segmented into partitioned treatment data segments corresponding to predefined process parameter ranges. Hence, the treatment data 10a, 10b in each partition are indicative of a respective process parameter, wherein particularly the treatment data 10a in each partition are segmented according to whether they are indicative of, for instance, low, normal or high values of the respective process parameter. Values statistically considered as outliers may form a further segment.

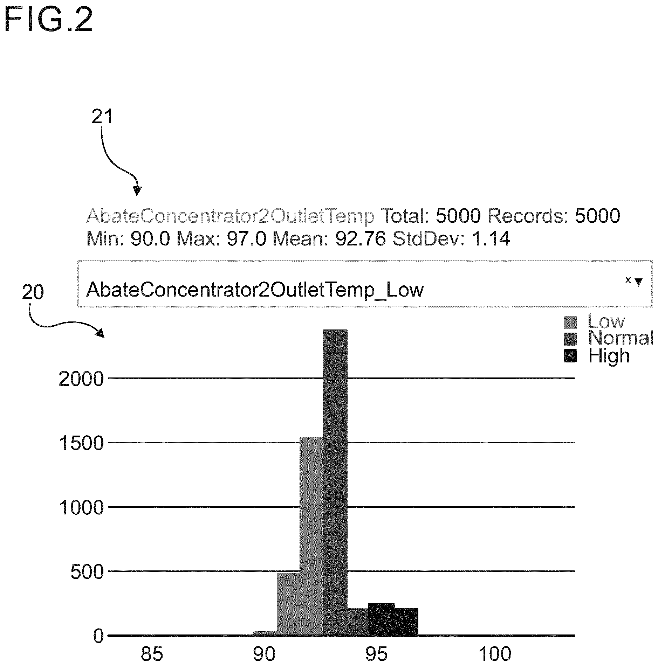

An exemplary distribution of values of a user-selected process parameter 21, which in this case directly corresponds to data recorded with a specific temperature sensor during a coating and/or paint treatment of a plurality of vehicles 10, is illustrated in Fig. 2 in the form of a graphical representation determined by the graphical representation determining unit 104. In this case the graphical representation involves a segmented histogram 20, i.e. a histogram of the values of the user-selected process parameter 21. The histogram has been determined based on data from 5,000 vehicle treatments. As seen in Fig. 2, during these 5,000 treatments, the process parameter 21 had a minimum value of 19.0, a maximum value of 97.0, a mean of 92.76 and a standard deviation of 1.14 degrees. While this is already valuable information, the histogram 20 visualizes for the user the distribution of the values of the process parameter 21 in more detail. In this case, it can be seen that the process parameter 21 tends to have relatively low to normal values, while higher than normal values are relatively rare. Moreover, its values during the treatment of the 5,000 vehicles were not distributed particularly widely, as reflected by the relatively narrow histogram 20.

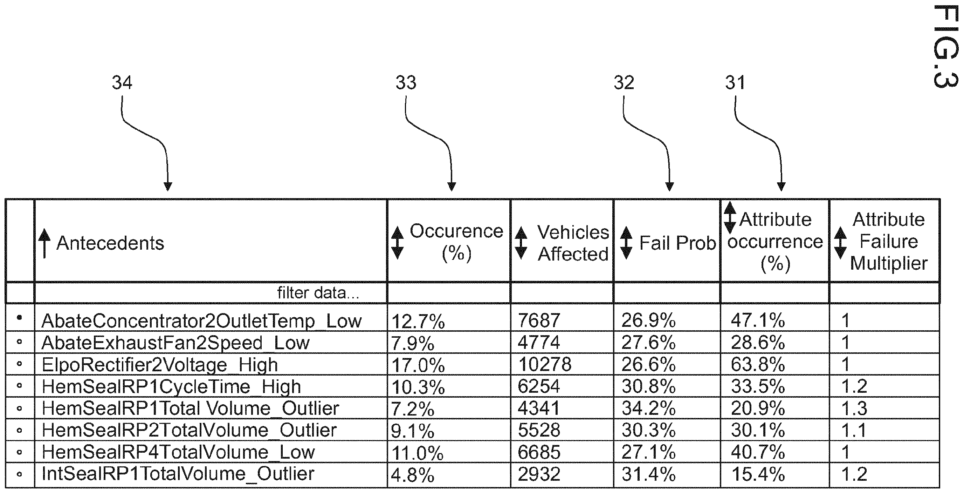

Fig. 3 shows schematically and exemplarily an output of the critical process parameter range identifying unit 103a in the form of a table. In the column of the table called "Antecedents", several partitioned treatment data segments 34 are listed by name. The partitioned treatment data segments 34 correspond to respective process parameter ranges, as indicated by the suffixes "Low", "High" and "Outlier" of the listed names, for instance.

In the column called "Attribute occurrence", corresponding occurrence indicators 31 are listed. The occurrence indicators indicate how often treatment data from the associated partitioned treatment data segment 34, i.e. the partitioned treatment data segment 34 in the respective same line of the table, occurred. In other words, the occurrence indicators 31 indicate how often a process parameter fell into a respective range.

Furthermore, the column called "Vehicles Affected" lists the number of vehicles 10 for which the process parameter indicated by the treatment data in the respective treatment data segment 34 has a relevance. This number indicates the statistical basis on which the occurrence indicators 31 are determined. The numbers in the column called "Vehicles Affected" differ among the partitioned treatment data segments 34, since the types of vehicles 10 covered by the considered database of past treatments differ from each other, implying different processing steps and hence rendering certain process parameters which are relevant for some vehicles 10 irrelevant for others.

The critical process parameter range identifying unit 103a is particularly configured to determine a conditional occurrence indicator 32 indicating how often, among all occurrences of treatment data from a respective partitioned treatment data segment 34, an insufficient treatment quality was achieved, as indicated by the quality indicators Q. The conditional occurrence indicators 32 are listed in the column called "Fail Prob" of the table shown in Fig. 3. From the first (selected) line of the table shown in Fig. 3, for instance, it can be derived that a low value of the outlet temperature of the "abate concentrator 2" has been recorded in 47.1% of the 7687 vehicle treatments in which the "abate concentrator 2" is activated at all (as indicated in the column "Vehicles Affected"), wherein in 26.9% of these 47.1% of the 7687 cases an insufficient treatment quality was achieved. This leads to an overall critical occurrence indicator 33 of 12.7%, as also determined by the critical process parameter range identifying unit 103a and indicated in the column called "Occurrence" of the table shown in Fig. 3.

In the illustrated embodiment, the critical process parameter range identifying unit 103a is further configured to determine an indicator indicating how much more likely an insufficient treatment quality is to be found with a given process parameter in a predefined range, i.e. treatment data in a corresponding partitioned treatment data segment 34, as compared to an average treatment quality. In the table of Fig. 3, for instance, these indicators are listed in the column called "Attribute Failure Multiplier". For the first of the listed partitioned treatment data segments 34, the "1" indicated in the table implies that no increased chance of achieving an insufficient treatment quality is associated with this partitioned treatment data segment 34, as compared to an average rate of insufficient treatment qualities observed in the past object treatments considered as a database.

Optionally, the critical process parameter range identifying unit 103a may be configured to determine an occurrence indicator 31, a conditional occurrence indicator 32 and/or a critical occurrence indicator 33 as above, only not for individual partitioned treatment data segments 34, but instead for pairs of partitioned treatment data segments 34, or corresponding process parameter ranges. In the column called "Antecedents" of the table shown in Fig. 3, then, pairs of partitioned treatment data segments 34 would be listed, wherein the indicators in the remaining columns of the table would be determined for those pairs. This allows a user to gain yet more sophisticated insights into the treatment process. Such insights may be yet more valuable because an effect on achieved treatment qualities may only arise from a combination of treatment sections. For instance, the pressure of two adjacent nozzles spraying paint on a vehicle's surface may only lead to an insufficient overall treatment quality if both of them are consistently too high or too low, whereas if only one of the two has a malfunction, this may be compensated by the other of the two.

In further variants, tables like the one shown in Fig. 3 may be determined and shown to a user not for individual partitioned treatment data segments 34 and also not for pairs of partitioned treatment data segments as indicated in the previous paragraph, but for triples, quadruples, et cetera, and generally n-tuples of partitioned treatment data segments 34. Moreover, in some embodiments a user may select between the respective tables to be generated and shown to him or her, and he or she may select the particular partitioned treatment data segments 34, or process parameter ranges, to be combined as pairs, triples, quadruples, et cetera.

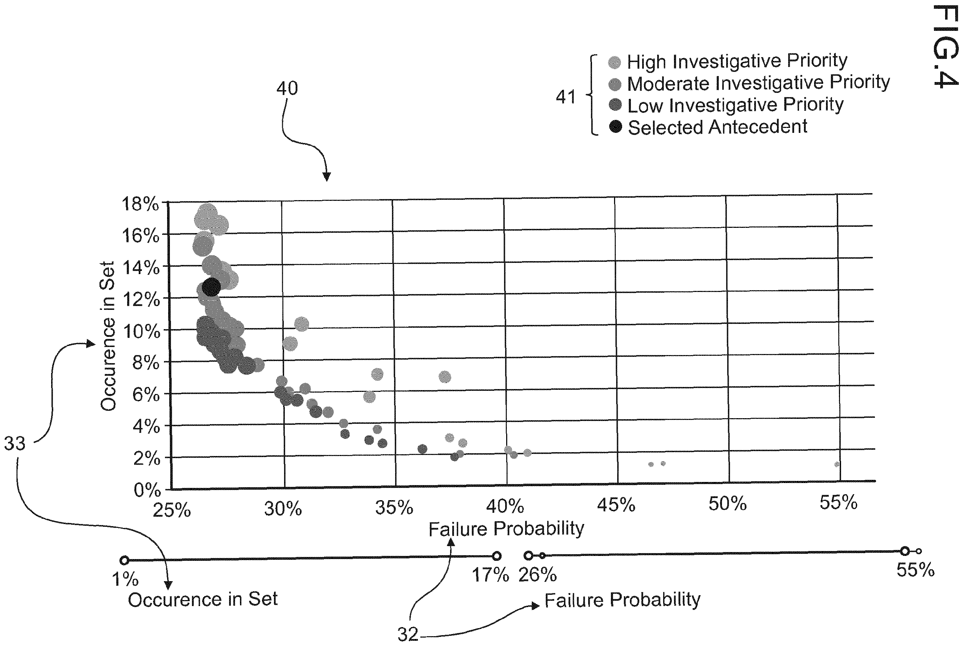

As illustrated schematically and exemplarily in Fig. 4, the graphical representation determining unit 104 is configured to determine a scatterplot 40 as graphical illustration, wherein the scatterplot 40 comprises data points representing the partitioned treatment data segments 34 listed in the table of Fig. 3 in terms of the critical occurrence indicator 33 and the conditional occurrence indicator 32. Hence, each dot in the scatterplot shown in Fig. 4 corresponds to one line in the table of Fig. 3, wherein the sizes of the dots in the scatterplot 40 represent the numbers in the column called "Vehicles Affected" of the table of Fig. 3. By clicking on one of the dots in the scatterplot, a user may be guided to the histogram, as shown in Fig. 3, corresponding to the process parameter associated with the dot that has been clicked. Further interactive functionality is offered by the scatterplot in terms of drag-bars, as seen at the bottom of Fig. 4, which can be used by a user for filtering the scatterplot, thereby effectively adjusting its axes. Alternatively, the plot space itself may be clicked and dragged as desired by the user.

As also seen in Fig. 4, the critical process parameter range identifying unit 103a is configured to determine a degree of criticality 41 for the plurality of process parameter ranges based on the indicators 31, 32, 33 determined for the partitioned treatment data segments 34. Those process parameters for which a high degree of criticality 41 has been determined may be considered by the user with a high investigative priority. In the scatterplot shown in Fig. 4, the dots corresponding to a high degree of criticality are located towards the top right.

It may be preferred that the system 100, particularly the analysis unit 103, comprises a coating and/or paint quality influence determining unit that functions analogously to the critical process parameter range identifying unit 103a, except that, instead of certain process parameters and their ranges as indicated by the partitioned treatment data segments 34 like the ones listed in the table of Fig. 3, collected coating and/or paint data is considered as a potential cause for insufficient material treatment qualities. A table like the one shown in Fig. 3 and a scatterplot like the one shown in Fig. 4 may then also be generated for an output of the coating and/or paint quality influence determining unit. Likewise, the coating and/or paint data may be combined with the other treatment data and analyzed collectively to form combined tables and scatterplots as seen in Figs. 3 and 4.

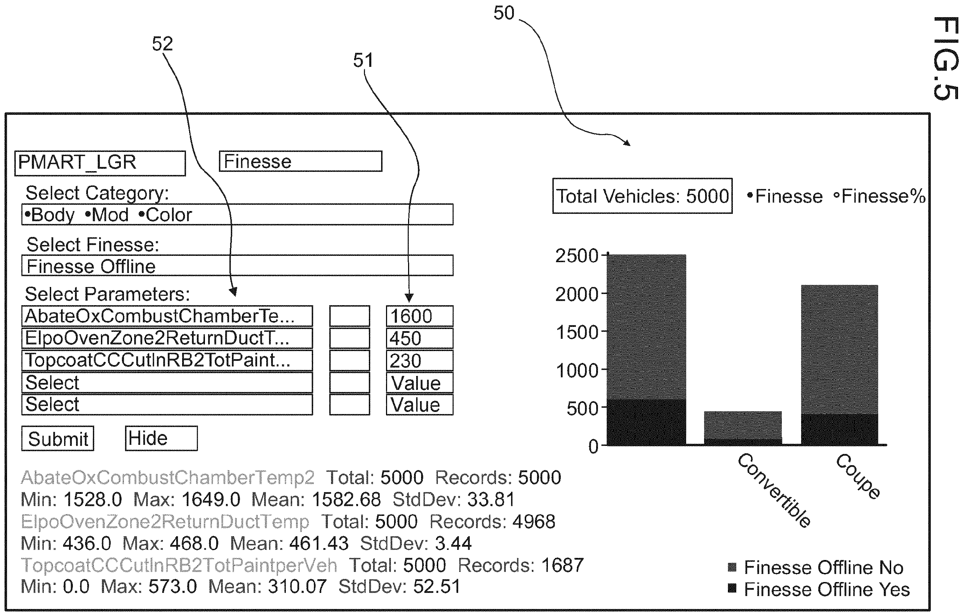

In Fig. 5, which illustrates an output of the user input-based unit 103b, a further graphical user interface is schematically and exemplarily shown via which a user may gain insights into the vehicle coating and/or painting process analyzed by the analysis unit 103. In particular, the user input-based unit 103b may be configured to determine how often each of the user-selected ranges 51 of the user-selected process parameters 52 led to an insufficient treatment quality for a user-selected class of vehicles 10 being treated. Hence, the vehicles 10 being treated may be classified into different classes, and statistical correlations between the achieved treatment quality Q and the observed treatment data 10, 10b may be explored in a class-specific manner. Vehicle classes may refer to a body type or color of the vehicle. Exemplary body types of a vehicle may be "convertible" or "coupe", as indicated in Fig. 5.

Apart from the class-specific analysis, the user interface shown in Fig. 5 also allows a user to combine selected and adjustable process parameter ranges, wherein these combinations are then considered regarding their likelihood for leading to an insufficient treatment quality Q. For instance, in the case illustrated by Fig. 5, three process parameters 52 are selected by the user, wherein for each of the process parameter 52, a respective range 51 has been selected. In the bar diagram 50 shown in the right part of the user interface in Fig. 5, the number of vehicles 10 for which a sufficient treatment quality Q was achieved and the number of vehicles 10 for which no sufficient treatment quality Q was achieved is indicated in terms of accordingly segmented bars, wherein the left of the three bars refers to all treated vehicles of the class "FinesseOffline" and for which the selected process parameters have been observed, the middle of the three bars refers to just the class of convertible vehicles and the right of the three bars refers to the class of coupe vehicles among all treated vehicles of the class "FinesseOffline" and for which the selected process parameters have been observed. Hence, in particular, the bar diagram 50 is generated for only the vehicles that a) are in the selected class and b) during whose treatment treatment data were recorded that correspond to process parameter values in the ranges selected in the left part of the user interface.

An interface of the type shown in Fig. 5 allows for the user to select vehicle parameters (body, color, paint color, etc.) and see the variance in FTQ in each, selectable by either relative percentage or absolute number of vehicles. Particularly valuable insights can be gained by virtue of the ability of the user to filter by process parameters (area duration, parameter levels, etc.). By adding, as in the illustrated case, up to five process parameters and entering the condition of those parameters (as guided by the user interface) the user can determine impact on FTQ directly by impact from the process parameter.

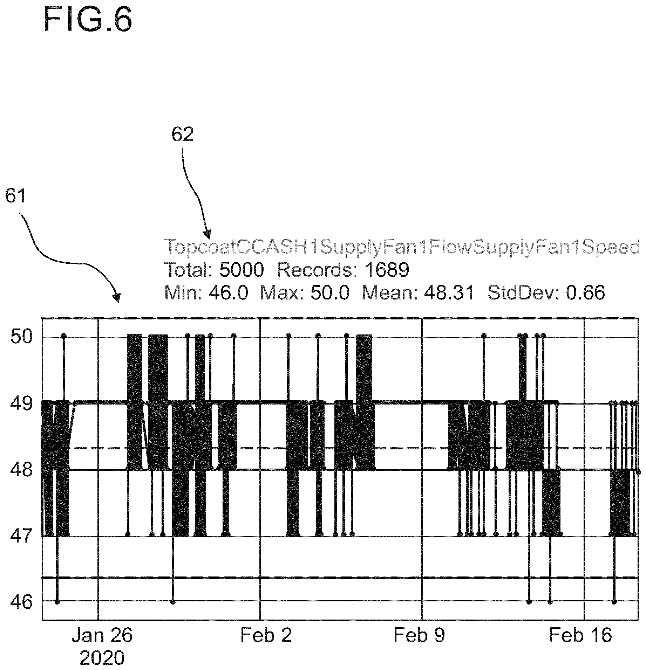

In order to assess a reliability of the treatment data 10a, the treatment data quality determining unit 103c is configured to determine, based on the treatment data 10a, a value of each of the plurality of process parameters for the past treatment of each of the plurality of vehicles 10. The graphical representation determining unit 104 is further configured to determine as graphical representation also a plot 61, as shown in Fig. 6, of the values of a user-selected one 62 of the plurality of process parameters over the past treatments of the plurality of vehicles 10. Hence, in a further view of the above referenced user interface, a user may select a process parameter of interest, wherein additionally or alternatively to a histogram as shown in Fig. 2, the distribution in values of this process parameter may also be graphically represented in terms of fluctuations in time or across treated vehicles 10, as shown in Fig. 6. In the plot 61, the boundaries of the darker shaded area, indicated by an upper and a lower dashed line, correspond to the control limits of the sensors used for collecting the plotted data. As seen in Fig. 6, the lower control limit has been exceeded five times in the shown time window.

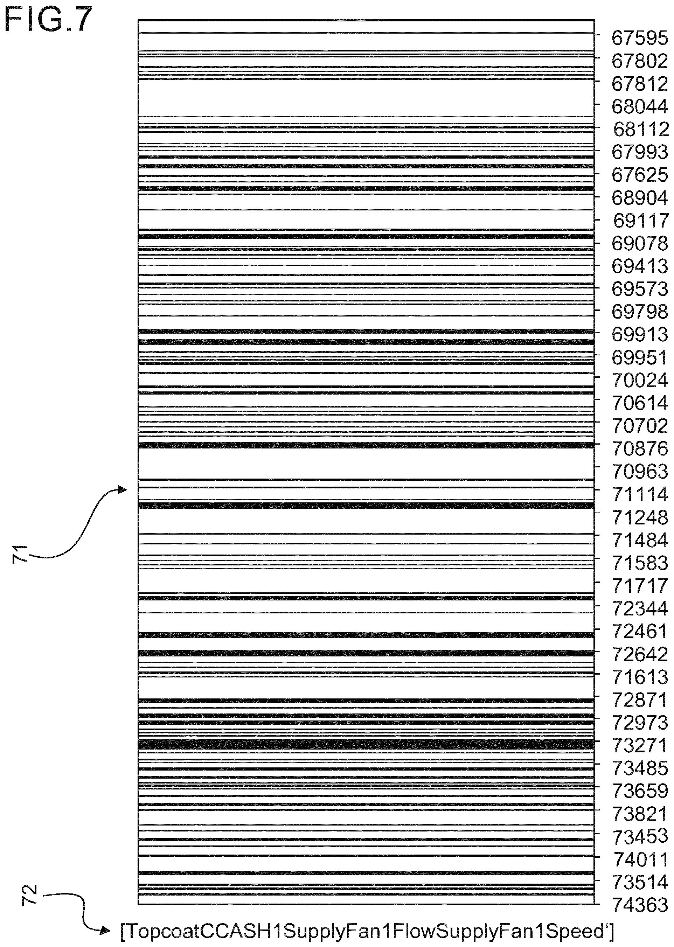

Moreover, as illustrated schematically and exemplarily by Fig. 7, instead of variations of selected process parameters, also their availability may be graphically represented. For this purpose, the treatment data quality determining unit 103c may be configured to determine, based on the treatment data 10a, whether or not each of the plurality of process parameters was determined for the past treatment of each of the plurality of vehicles 10. In Fig. 7, a binary line pattern 71 comprising lines and gaps between lines is determined as a corresponding graphical representation by the graphical representation determining unit 104 for a user-selected process parameter 72. The lines of the line pattern 71 represent treatments of vehicles 10 for which the selected process parameter was determined, while the gaps between the lines represent treatments of vehicles 10 for which the selected process parameter was not determined. The line pattern 71 shown in Fig. 7 could also be regarded as a heat map indicating data availability. In the illustrated case, the heat map shows no particularly apparent patterns of missing data. However, for over half of the represented 5000 vehicles 10 no treatment data corresponding to the selected process parameter was recorded, indicating a considerable lack of sensor reliability.

The treatment data quality determining unit 103c may be configured to determine a variability score and/or a missingness score for each of the process parameter ranges. The variability score is preferably a quantitative descriptor or other numerical indicator of a variability of treatment data corresponding to the respective process parameter range, and may be determined based on a respective mean and standard deviation. Hence, the variability score could be viewed as a numerical characteristic associated with the plot 61 shown in Fig. 6. The missingness score is preferably a percentage or other indicator of historical sensor data or other treatment data corresponding to the respective process parameter range that is missing, i.e., for instance, not included in the database used. Hence, the missingness score may be viewed as a numerical characteristic associated with the line pattern 71 shown in Fig. 7. The variability score and the missingness score can be used to characterize individual sensors used for monitoring the treatment process.

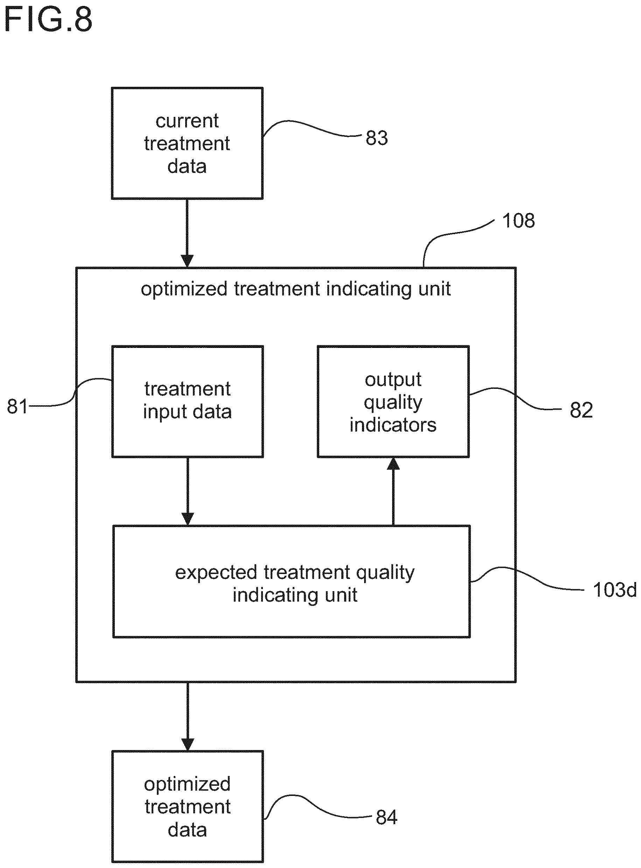

A user of the system 100 is assisted by the several offered graphical representations in gaining insights into the material treatment process of, in the case referenced herein, coating and/or painting vehicles 10. More concretely, the reliability of selectable sensors along a production line of vehicles 10 may be easily assessed, and effects of selectable sections along the material treatment process on the finally achieved treatment quality can be identified more efficiently. Based on such insights, the user may then choose to adjust selected process steps, such as by tuning selected nozzle temperatures or pressures, for instance. On the other hand, a user may also be guided by automatically generated suggestions regarding such adjustments. Suggestions in this regard may be made by the system 100 as well. For this purpose, the system 100 preferentially comprises an expected treatment quality indicating unit 103d as indicated in Fig. 8 in a schematic and exemplary manner.

The expected treatment quality indicating unit 103d is configured to provide, if provided with treatment data 10a, 10b for a given treated vehicle 10 as input 81, an output 82 indicative of an expected treatment quality for the given treated vehicle 10 based on a trained model relating treatment data to quality indicators. The trained model may be a machine learning model, for instance. The model may have been trained to predict, for given treatment data received as input 81, expected quality indicators 83 for the respectively treated vehicle 10. As illustrated in Fig. 8, the system 100 may comprise an optimized treatment indicating unit 108 configured to receive treatment data for one or more treated objects as input 83 and to provide, as output 84, an indication of treatment data that are optimized with respect to the treatment data received as input 83, by using the expected treatment quality indicating unit 103d. The optimized treatment data 84 correspond to optimized process parameters, such as optimized coating and/or paint data. The treatment process may hence be adjusted by considering the output 84 of the optimized treatment indicating unit 108.

In a basic embodiment, for instance, the optimized treatment indicating unit 108 may be configured to use the expected treatment quality indicating unit 103d to determine an expected treatment quality for the received current treatment data 83 and, if the expected treatment quality is insufficient, determine expected treatment qualities for adjusted versions of the received current treatment data 83 until one of the adjustments leads to a sufficient expected treatment quality. The adjusted version of the received current treatment data 83 which led to a sufficient expected treatment quality may then be provided by the optimized treatment indicating unit 108 as an output 84, i.e. as optimized treatment data.

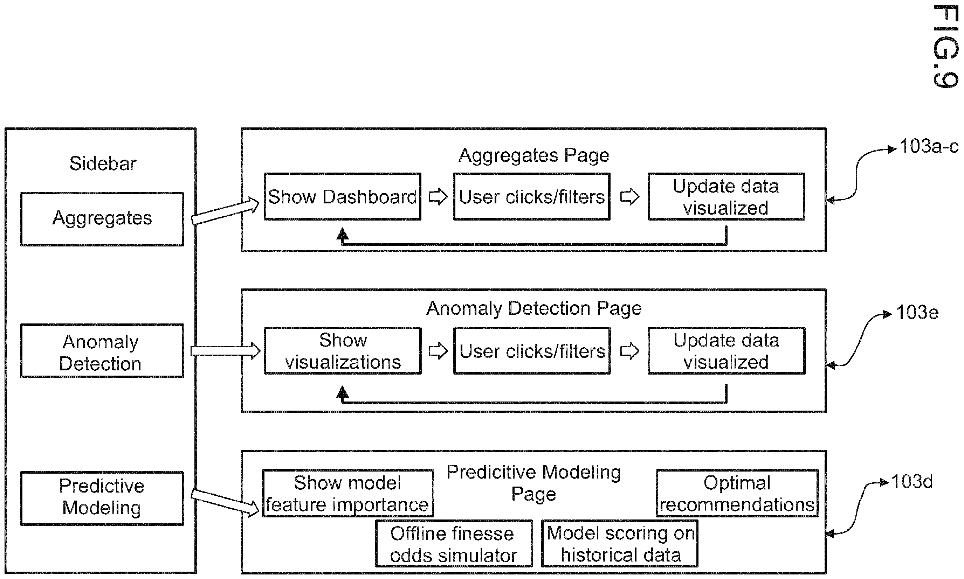

Fig. 9 shows schematically and exemplarily a structure of a user interface via which the functions of the system 100 may be accessed by a user. The shown structure could be a navigational structure of a computer program corresponding to the system 100, for instance. In the illustrated example, the system 100 comprises, apart from the units 103a-d described above, a further unit 103e, which offers a further functionality that lies, regarding a degree of assistance provided to a user, between the units 103a-c and the unit 103d. The units 103a-c are indicated in Fig. 9 as corresponding to an "Aggregates Page", since the analysis they offer is relatively descriptive, leaving room for own investigations into the data by the user. The unit 103d is indicated in Fig. 9 as corresponding to a "Predictive Modeling Page", since it provides suggestions for optimizing the vehicle treatments that are already ready to be implemented. The unit 103e is indicated in Fig. 9 as corresponding to an "Anomaly Detection Page", indicating that it can assist the user in finding non-optimal parts of treatment processes yet further than the units 103a-c, but without yet providing suggestions ready to be implemented and hence still allowing for a degree of own investigations by the user. As seen in Fig. 9, the functions of each of the units 103a-c are accessible by a user via a sidebar, which may remain visible on a display while the user is interacting with further interactive elements associated with a currently selected one of the units 103a-c. Such interactive elements could be dropdown menus, selection buttons or bars, or text fields for entering filters, as visible in Figs. 2 to 5, for instance.

As indicated in Fig. 9 regarding the "Aggregates Page", the various graphical representations of the outputs by the units 103a-c, as shown in Figs. 2 to 8, for instance, may be shown together in a single window in the form of a dashboard, which may be updated depending on user selections of particular elements thereof. Such updates of visualized analysis results may also be realized for the outputs of the further unit 103d, corresponding to the "Anomaly Detection Page". Regarding the "Predictive Modeling Page", corresponding to the unit 103d, it is indicated in Fig. 9 that a user may analyze the model used by the unit 103d for generating the predicted quality indicators 82 regarding a relevance of particular parts of the treatment data received as input 81 for the predicted quality indicators 82 ("Show model feature importance"). As also indicated in Fig. 9, if the predicted quality indicator is an offline finesse, the used model may also be viewed as simulating the odds for a sufficient versus an insufficient offline finesse. Moreover, the used model may be evaluated based on actual historic data, i.e. by comparing its predictions to actually assessed treatment qualities. As indicated in Fig. 9, corresponding scores may be determined for different models, such that a plurality of models may be compared based on their respective scores. A selected one of the models may then be chosen for determining optimization recommendations for the respective treatment process at hand.

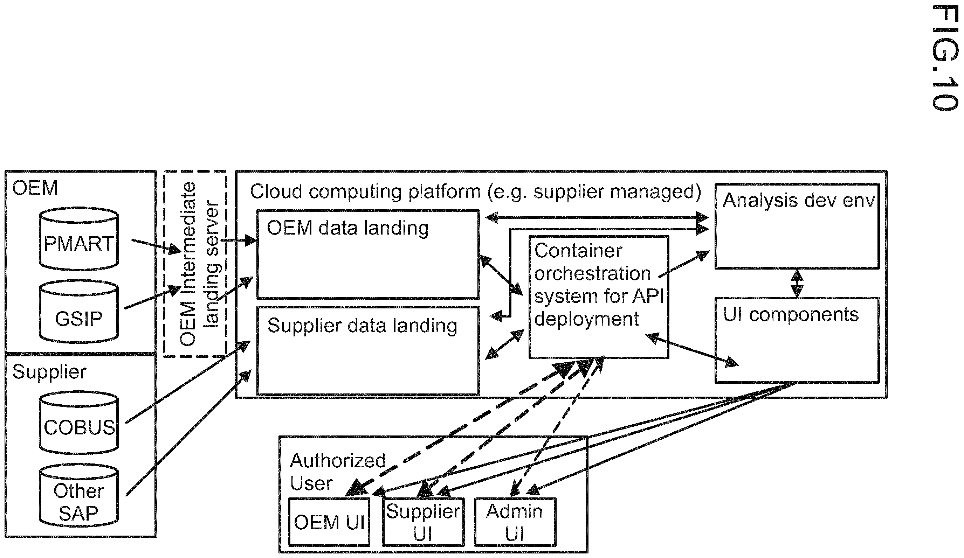

Fig. 10 shows schematically and exemplarily a data architecture in which the functions of the above-described system 100 can be realized. In the illustrated case, vehicles 10 or parts thereof are coated and/or painted by an original equipment manufacturer (OEM) using coatings and/or paints supplied by a supplier. Both the original equipment manufacturer as well as the supplier are authorized users of the system 100. Besides, an administrator (admin) may be defined. A user interface by which the functions of the system 100 are accessible may vary depending on whether the original equipment manufacturer, the supplier or the admin accesses the system 100, thereby making different functions of the system 100 accessible to the different users.

In the example shown in Fig. 10, treatment data 10a, 10b is uploaded to a cloud computing platform implementing the system 100 by both the original equipment manufacturer and the supplier. The cloud computing platform may be managed by the supplier. The treatment data 10a, 10b is uploaded to the cloud platform via landing servers of the cloud computing platform, wherein for the part of the treatment data uploaded by the original equipment manufacturer an intermediate landing server may be used, which first receives the treatment data from the original equipment manufacturer and then forwards the received treatment data to the data landing server provided at the cloud computing platform for the original equipment manufacturer. The data from the original equipment manufacturer may be uploaded in predefined time intervals, such as once daily or once weekly. In some embodiments, the cloud computing platform may be hosted on cloud-based servers owned by the original equipment manufacturer, but open for edits and changes by the supplier.

The cloud computing platform further comprises a container orchestration system for deploying application programming interfaces optionally accessible by an accordingly authorized user, an analysis environment and user interface (Ul) components. The arrows shown in Fig. 10 indicate how the different elements of the cloud computing platform implementing the system 100 can interact with each other, particularly by an exchange of data. In an exemplary embodiment, the treatment data providing unit 101 and the quality indicator providing unit 102 of the system 100 could be viewed as being realized by the data landing servers in Fig. 10, the analysis unit 103 as being realized by the analysis environment and the graphical representation determining unit 104 by the user interface components.

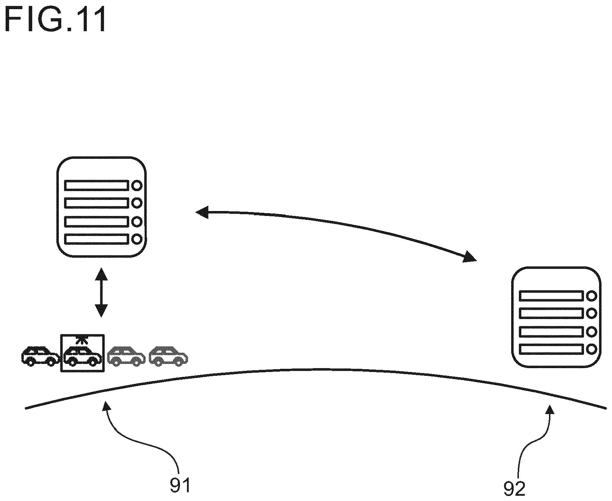

Fig. 11 illustrates schematically and exemplarily that the treatment site 91, i.e. the paint shop of the original equipment manufacturer for vehicles 10, for instance, may be located spatially distant from an analysis site 92. Data from the treatment process may then be communicated from sensors at the treatment site 91, via a private or public communication network, to the analysis site 92. The computing infrastructure at the analysis site 92 may be localized or part of a cloud computing infrastructure as described with reference to Fig. 10.

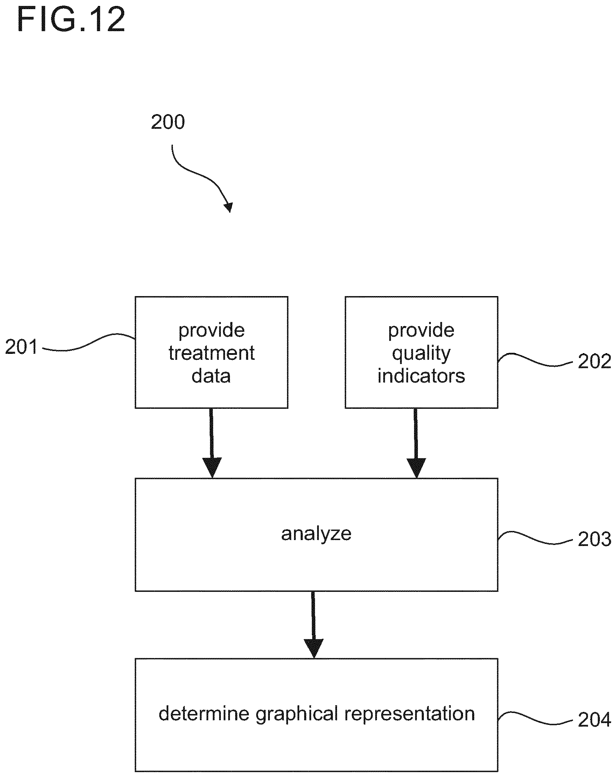

Fig. 12 shows schematically and exemplarily a method 200 for assisting a user in adjusting a material treatment process in which successively provided objects, particularly vehicles 10, are being treated. The method 200 includes a step 201 of providing treatment data 11a, 11b indicative of process parameter values during past treatments of a plurality objects in the material treatment process, a step 202 of providing a quality indicator Q for each of the plurality of objects, the quality indicators Q being indicative of treatment qualities achieved for the respective objects, a step 203 of analyzing at least one of the treatment data 11a, 11b and the quality indicators Q, and a step 204 of determining a graphical representation, such as in one of the forms 40, 50, 61, 71 indicated above, of a result of the analysis.

The system, apparatus and method presented herein for assisting a user in adjusting a material treatment process can provide the user with actionable insights into the treatment process, wherein "actionable" may be defined as referring to analyses, visualizations and/or shared knowledge leading a manufacturer to make changes in their manufacturing processes that allow for an increased consistency or quality of goods. In this way, a process quality may be improved, while costs of poor quality may be reduced. The actionable insights may be provided with reference to specific portions and sensors in the treatment process. Preferably, the manufacturer is delivered a prioritized set of insights, categorized by their relative impact on to the treatment process. Prioritization may be achieved based on how frequent a condition occurred in the treatment process in the past, as derivable from the treatment data, and based on how often it contributed to an insufficient treatment quality, as derivable from the quality indicators corresponding to the treatment data. Machine learning models may be used for providing recommendations for optimized process parameter value ranges, such as for particular equipment in a vehicle paint shop, and thereby improving first time quality. Moreover, statistical analyses, machine learning models and predictions as well as any web applications relating thereto may be maintained by the manufacturer, a third party like a supplier, for instance, or both.

Generally, it is suggested herein to increase first time quality rates in treatment processes like particularly paint jobs for vehicles or vehicle parts by establishing correlations and/or causations between parameters of the treatment processes, which are in so far regarded as input parameters, and defects observed at an end of the processes and based on which the treatment quality is assessed. By increasing first time quality rates, treatment speeds for a plurality of vehicles can be increased, which also allows to save treatment costs, since a need for secondary processing can be avoided.

Data may be collected from several treatment sites, possibly belonging to different manufacturers, wherein the collected data may be collectively analyzed. The tools suggested herein could therefore be regarded as being scalable across different treatment sites. Moreover, the tools may be used to find optimizing adjustments to the processes themselves, which may be expressed in terms of the temporal sequence of processing steps, to material like paint or coating used in the treatment process, and/or equipment used in the treatment process, such as for applying the paint or coating. The treatment data and hence the process parameters referred to herein may relate to any of these three aspects of a treatment process. By pairing process analytics with material expertise, such as chemical knowledge about paints and coatings, the treatment efficiency can be specifically increased.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the processing of the providing of treatment data and quality indicators any analysis thereof, the determining of graphical representations, et cetera, performed by one or several units or devices can be performed by any other number of units or devices. These procedures, can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

A system for assisting a user in adjusting a material treatment process in which successively provided objects are being treated is presented. The system comprises a data providing unit to provide treatment data indicative of process parameter values during past treatments, and a quality indicator providing unit to provide quality indicators for the objects that indicate respective treatment qualities achieved. Furthermore, the system comprises an analysis unit to analyze the treatment data and/or the quality indicators, and a graphical representation determining unit to determine a graphical representation of a result of the analysis. With a system of the presented kind, insights into the material treatment process can be provided to a user that can assist him/her in adjusting the process in a way allowing for an increased treatment quality.

## Claims

1. A system (100) for assisting a user in adjusting a material treatment process in which successively provided objects (10) are being treated, the system comprising:
- a treatment data providing unit (101) configured to provide treatment data (11a, 11b) indicative of process parameter values during past treatments of a plurality objects (10) in the material treatment process,
- a quality indicator providing unit (102) configured to provide a quality indicator (Q) for each of the plurality of objects (10), the quality indicators (Q) being indicative of treatment qualities achieved for the respective objects (10),
- an analysis unit (103) configured to analyze at least one of the treatment data (11a, 11b) and the quality indicators (Q) and to provide a result of the analysis as an output, and
- a graphical representation determining unit (104) configured to determine a graphical representation (40, 50, 61, 71) of the output of the data analysis unit (103).

2. A system as defined in claim 1, wherein the data analysis unit (103) comprises at least one of:
- a critical process parameter range identifying unit (103a) configured to identify critical process parameter ranges by determining, based on the treatment data (11a, 11b) and the quality indicators (Q), how often each of a plurality of process parameter ranges led to an insufficient treatment quality,
- a user input-based unit (103b) configured to determine, based on the treatment data (11a, 11b) and the quality indicators (Q), and further based on user-selected ranges (51) of user-selected process parameters (52), how often each of the user-selected ranges (51) of the user-selected process parameters (52) led to an insufficient treatment quality,
- a treatment data quality determining unit (103c) configured to determine, based on the treatment data (11a, 11b), at least one of:
- a variability indicator for each of a plurality process parameters, the variability indicator indicating a variability of values of the respective process parameters during the past treatments, and
- an availability indicator for each of a plurality of process parameters, the availability indicator indicating for how many treated objects (10) treatment data (11a, 11b) indicative of values of the respective process parameter were provided, and
- wherein the graphical representation determining unit (104) is configured to determine a graphical representation (40, 50, 61, 71) of an output of the critical process parameter range identifying unit (103a), the user input-based unit (103b) and/or the treatment data quality determining unit (103c), respectively.

3. A system as defined in claim 1 or 2, wherein the material treatment process involves a coating and/or painting of objects (10), and wherein the objects (10) being treated are vehicles or vehicle parts.

4. A system as defined in any of the preceding claims, wherein the treatment data (11a, 11b) include sensor data (11a) from a plurality of sensors configured to measure process parameters of the material treatment process.

5. A system as defined in any further of the preceding claims, wherein the treatment data (11a, 11b) include coating and/or paint data (11b), the coating and/or paint data (11b) being indicative of a respective coating and/or paint used for treating each of the plurality of objects (10).

6. A system as defined in any of the preceding claims, wherein the treatment data providing unit (101) is configured to provide the treatment data (11a, 11b) partitioned according to the process parameters for whose values they are indicative, wherein the critical process parameter range identifying unit (103a) is configured to segment the partitioned treatment data further into partitioned treatment data segments (34) corresponding to a plurality of process parameter ranges.

7. A system as defined in claim 2 and any of claims 3 to 6, wherein the critical process parameter range identifying unit (103a) is configured to determine, for each of the partitioned treatment data segments (34), at least two of a) an occurrence indicator (31) indicating how often treatment data from the partitioned treatment data segment (34) occurred, b) a conditional occurrence indicator (32) indicating how often, among all occurrences of treatment data from the partitioned treatment data segment (34), an insufficient treatment quality was achieved as indicated by the quality indicators (Q), and c) a critical occurrence indicator (33) indicating how often treatment data from the partitioned treatment data segment (34) occurred and also an insufficient treatment quality was achieved as indicated by the quality indicators (Q) .

8. A system as defined in claim 7, wherein the graphical representation determining unit (104) is configured to determine a scatterplot (40) as graphical illustration, wherein the scatterplot (40) comprises data points representing the partitioned treatment data segments (34) in terms of the critical occurrence indicator (33) and the conditional occurrence indicator (32).

9. A system as defined in claim 2 and any of claims 3 to 8, wherein the user input-based unit (103b) is configured to determine how often each of the user-selected ranges of the user-selected process parameters led to an insufficient treatment quality for a user-selected class of objects (10) being treated.

10. A system as defined in claim 2 and any of claims 3 to 9, wherein a) the treatment data quality determining unit (103c) is configured to determine, based on the treatment data (11a, 11b), a value of each of the plurality of process parameters for the past treatment of each of the plurality of objects (10), wherein the graphical representation determining unit (104) is configured to determine as graphical representation a plot (61) of the values of a user-selected one (62) of the plurality of process parameters over the past treatments of the plurality of objects (10), and/or wherein b) the treatment data quality determining unit (103c) is configured to determine, based on the treatment data (11a, 11b), whether or not each of the plurality of process parameters was acquired for the past treatment of each of the plurality of objects (10), wherein the graphical representation determining unit (104) is configured to determine as graphical representation for a user-selected one (72) of the plurality of process parameters a binary line pattern (71) comprising lines and gaps between lines, wherein the lines represent treatments of objects (10) for which the user-selected process parameter was acquired and the gaps between the lines represent treatments of objects (10) for which the user-selected process parameter was not acquired.

11. A system as defined in any of the preceding claims, wherein the system further comprises an expected treatment quality indicating unit (103d) configured to provide, if provided with treatment data for a given treated object (10) as input (81), an output (82) indicative of an expected treatment quality for the given treated object (10) based on a trained model relating treatment data (11a, 11b) to quality indicators (Q), wherein the system further comprises an optimized treatment indicating unit (108) configured to receive treatment data for one or more treated objects as input (83) and to provide, as output (84), an indication of treatment data optimized with respect to the treatment data received as input (83), by using the expected treatment quality indicating unit (103d).

12. A system as defined in any of the preceding claims, wherein the treatment data (11a, 11b) are treatment data (11a, 11b) acquired at a treatment site (91) at which the plurality of objects (10) have been treated, and wherein the data processing carried out by the critical process parameter range identifying unit (103a), the user input-based unit (103b) and/or the treatment data quality determining unit (103c), respectively, is carried out at a data processing site (92), wherein the data processing site (92) does not coincide with the treatment site (91).

13. An apparatus for assisting a user in adjusting a material treatment process in which successively provided objects (10) are being treated, the apparatus comprising:
- a system (100) as defined in any of the preceding claims, and
- a display for displaying the graphical representation.

14. A method (200) for assisting a user in adjusting a material treatment process in which successively provided objects (10) are being treated, the method including:
- providing (201) treatment data (11a, 11b) indicative of process parameter values during past treatments of a plurality objects (10) in the material treatment process,
- providing (202) a quality indicator (Q) for each of the plurality of objects (10), the quality indicators (Q) being indicative of treatment qualities achieved for the respective objects (10),
- analyzing (203) at least one of the treatment data (11a, 11b) and the quality indicators (Q), and
- determining (204) a graphical representation (40, 50, 61, 71) of a result of the analysis.

15. A computer program comprising instructions which, when executed by a computer, cause the computer to carry out a method as defined in claim 14.
